# EUROPEAN PATENT APPLICATION

(11) **EP 4 443 098 A1**
(43) Date of publication of application: **09.10.2024**
(21) Application number: 22900577.2
(22) Date of filing: 30.11.2022
(51) Int. Cl.: F41G 1/34, F41G 1/36, F41G 1/14, F41G 11/00

(54) **SIGHT SYSTEM BASED ON COMBINATION OF INFRARED IMAGING, LOW-ILLUMINATION IMAGING, AND LED SIGHT LIGHT DOT, AND SIGHT HAVING THERMAL IMAGING FUNCTION**

(30) Priority: 02.12.2021 CN 202123004900 U; 14.08.2022 CN 202210970881
(71) Applicant: Huanic Corporation, Xi'an, Shaanxi 710077 (CN)
(72) Inventor: SUN, Jianhua, Xi'an, Shaanxi 710077 (CN); WANG, Dong, Xi'an, Shaanxi 710077 (CN); JIANG, Bingyi, Xi'an, Shaanxi 710077 (CN); CHENG, Xuewen, Xi'an, Shaanxi 710077 (CN)
(74) Representative: Weickmann & Weickmann PartmbB
(86) International application number: PCT/CN2022/135711
(87) International publication number: WO 2023/098773

(57) **Abstract**

A sight system based on a combination of infrared imaging, low-illumination imaging, and an LED sight light dot, comprising an LED graphics chip (20), a lens (3), a beam splitter (30), a display screen (31), a thermal imaging core assembly (13), a low-light night vision camera module (48), and a main control board (51). The thermal imaging core assembly (13) is electrically connected to the main control board (51), the low-light night vision camera module (48) is electrically connected to the main control board (51), the thermal imaging core assembly (13) and the low-light night vision camera module (48) are both electrically connected to the display screen (31), the main control board (51) is electrically connected to the LED graphics chip (20) and the display screen (31), separately, and light emitted from the LED graphics chip (20) and the display screen (31) is incident on the lens (3) after passing through the beam splitter (30).

## Description

### TECHNICAL FIELD

The present disclosure belongs to the technical field of sight systems, and in particular, relates to a sight system based on a fusion of infrared photography, low-illumination photography and an LED aiming light spot, and a sight with thermal imaging function.

### BACKGROUND

The light emitted from an LED chip installed on the existing gun sight, after being reflected by a glued lens, forms an aiming light spot. The LED chip has a luminous band of 560±80nm or other bands. The light emitted from the LED often contains a variety of colors such as red, yellow, green, etc., and the light containing the variety of colors is reflected by a narrow band interference filter film and a long-wave cut-off filter film coated on the glued lens and the light with a wavelength of 545±15nm and a wavelength greater than 600nm is reflected into the human eye, at the same time, the human eye observes the target and the environment around the target through the glued lens, and start shoots with an aiming means that the aiming light spot coincides with the target.

The patent application No. 201920048750.4 discloses an optical system of a reflective red dot sight that improves monochromaticity and concealment, including an LED chip and a lens used to reflect the light emitted by the LED chip. A filter coated with a narrow band interference filter film is arranged near the LED chip and between the LED chip and the lens. The filter is used to filter out light of a wider band other than the central wavelength emitted by the LED chip to improve the monochromaticity of the light entering the human eye. The light energy of the light with wavelengths other than the central wavelength emitted from the filter is weakened or cut off, and the energy of the light with the central wavelength emitted from the filter is illuminated on the glued reflective surface of the lens. The glued reflective surface is coated with a cut-off film that cuts off the central wavelength, so that when looking toward the lens from a long distance, the light emitted from the lens is not easy to be detected, thereby improving the concealment of the sight. In such a way of directly observing the target by the human eye, it is very inconvenient or quite difficult to accurately judge or identify the target in a shooting environment with a long distance or poor lighting.

The patent application No. 201922462324.8 discloses a two-light three-color optical system and a sight thereof, including a green light chip module, a red light chip module and a right-angle prism. The green light chip module and the red light chip module are arranged vertically, and the geometric center of the cubic prism is set at the intersection of the emitting rays of the green light chip module and the red light chip module. The cubic prism is coated with a composite film on a diagonal surface extending along the angular bisector of the angle between the emitting light rays of the green light chip module and red light chip module. The composite film is used to completely reflect the red light emitted from the red light chip module and transmit the green light emitted from the green light chip module. Upon the provided two red and green light sources with emitting lights perpendicular to each other, by means of the prism, the total reflection film or the transmission film, green light, red light or yellow light or the like can be generated through the control circuit, which greatly reduces the number of light sources as well as the size and weight of the sight. However, this sight is still depend on a direct observation of target with the human eye, which is quite difficult to accurately judge or identify the target in a shooting environment with a long distance or poor lighting.

### SUMMARY

In order to solve the problem that the observation and identification of the target are greatly affected by ambient light due to the fact that the existing optical system of a sight which requires a direct observation of target by human eye.

A sight system based on a fusion of infrared photography, low-illumination photography and an LED aiming light spot described in the present disclosure includes an LED graphics chip, a lens, a beam splitter, a display screen, a thermal imaging core assembly, a low-light night vision camera module, and a main control board. The thermal imaging core assembly is electrically connected to the main control board, the low-light night vision camera module is electrically connected to the main control board, the thermal imaging core assembly and the low-light night vision camera module are both electrically connected to the display screen, and the main control board is electrically connected with the LED graphics chip and the display screen, respectively. Light emitted by the LED graphics chip and light emitted by the display screen both pass through the beam splitter and are incident to the lens.

Further, the light incident from the display screen to the beam splitter and the light incident from the LED graphics chip to the beam splitter are arranged at 90°.

Further, the sight system based on the fusion of infrared photography, low-illumination photography and the LED aiming light spot includes the lens, an OLED screen, the thermal imaging core assembly, the low-light night vision camera module, and the main control board. The thermal imaging core assembly is electrically connected to the main control board, the low-light night vision camera module is electrically connected to the main control board, the thermal imaging core assembly and the low-light night vision camera module are both electrically connected to the display screen, the main control board is electrically connected to the OLED screen, and light emitted by the OLED screen is incident to the lens.

A sight with thermal imaging function described in the present disclosure includes a body, where a battery cover assembly, a thermal imaging lens assembly, a thermal imaging core assembly, a battery, an adjusting assembly, and a beam splitting display assembly are provided underneath the body. The battery cover assembly and the thermal imaging lens assembly are provided side by side. The battery is provided behind the battery cover assembly, the thermal imaging core assembly is provided behind the thermal imaging lens assembly, the adjusting assembly is provided behind the thermal imaging core assembly, and the beam splitting display assembly is provided above the adjusting assembly. The adjusting assembly further includes an adjusting screw, and the adjusting screw is provided in the rear of the adjusting assembly body.

Further, the battery cover assembly is replaced with an infrared lighting assembly, and the thermal imaging lens assembly is replaced with a low-light night vision camera module.

Further, a front cover is provided in front of the body, a lens is provided behind the front cover, a back cover is provided behind the body, a window protection glass is provided in front of the back cover, and a solar charging panel is provided in the middle of the top of the body.

Further, a first main control board and a second main control board are provided on the right side of the body, and the first main control board is located in front of the second main control board.

Further, the adjusting assembly includes an adjusting assembly main body, an LED base is provided in the adjusting assembly main body, the LED base is connected to a chip base, and an LED graphics chip is provided on the chip base. The lower left side of the adjusting assembly main body is provided with a slope, the slope is in contact with a beveled ejector block, and a first fine-tuning screw is provided on the left side of the beveled ejector block. A transverse ejector block is provided on the right side of the adjusting assembly main body, a second fine-tuning screw is provided on the right side of the transverse ejector block, and a transverse ejector spring is further provided between the adjusting assembly main body and the transverse ejector block. A compression spring is provided above the adjusting assembly main body.

Further, the beam splitting display assembly includes a beam splitter base, a beam splitter provided in the beam splitter base, a display screen provided on the right side of the beam splitter base, and a beam splitter cover provided above the beam splitter base.

Further, a conductive tube is further provided at the periphery of the battery. A conductive plate, a buffer pad, a conductive spring, and a positive electrode plate are provided in sequence in the rear of the battery.

Further, the thermal imaging lens assembly further includes a connecting sleeve, a lens gasket, a sealing gasket, and a core pressing ring. A core buffer pad is provided between the thermal imaging lens assembly and the thermal imaging core assembly.

Further, a data charging port is further provided on the right side of the body and behind the battery, and a charging indicator light is provided near the data charging port.

Further, a switch indicator light is provided on the left side of the body and near a second main control board.

The present disclosure provides the following beneficial effects: The sight system based on the fusion of infrared photography, low-illumination photography and the LED aiming light spot provided by the present disclosure with the fusion of low-light night vision, thermal imaging lens photography and observation of the target with human eye, can assist in observing the target or identifying the same, and then determining the aiming target through an aiming light spot, so as to perform an accurate shooting. The sight system based on the fusion of infrared photography, low-illumination photography and the LED aiming light spot can reduce the impact of environmental factors, such as light and distance, on the accuracy of shooting, enable the identification of targets in such a manner that it is not solely dependent on human observation of the target, improve the identifiability of the target and expands the application environment of red dot sights. The present disclosure further provides a sight with thermal imaging function, which can assist in observing the target or identifying the same through the fusion of low-light night vision, thermal imaging lens photography and observation of the target with human eye, so as to perform an accurate shooting. The sight with thermal imaging function can reduce the impact of environmental factors, such as light and distance, on the accuracy of shooting, and can also reduce the risk of exposure of shooters, which enables the identification of targets in such a manner that it is not solely dependent on human observation of the target, improves the identifiability of the target and expands the application environment of red dot sights.

The present disclosure will be further described in detail below with reference to embodiments.

### BRIEF DESCRIPTION OF THE DRAWINGS

FIG. 1 is a schematic diagram showing the principle of a sight system based on a fusion of infrared photography, low-illumination photography and an LED aiming light spot.
FIG. 2 is a first schematic view showing the application of the sight system based on the fusion of infrared photography, low-illumination photography and the LED aiming light spot.
FIG. 3 is a second schematic view of the application of the sight system based on the fusion of infrared photography, low-illumination photography and the LED aiming light spot.
FIG. 4 is a schematic view showing the light path of the sight system based on the fusion of infrared photography, low-illumination photography and the LED aiming light spot.
FIG. 5 is a schematic structural view of a sight with thermal imaging function.
FIG. 6 is a side cross-sectional view of the sight with thermal imaging function.
FIG. 7 is a first exploded view of the sight with thermal imaging function.
FIG. 8 is a second exploded diagram of the sight with thermal imaging function.
FIG. 9 is a first schematic structural diagram of an adjusting assembly of the sight with thermal imaging function.
FIG. 10 is a second schematic structural diagram of the adjusting assembly of the sight with thermal imaging function.
FIG. 11 is a third schematic structural view of the adjusting assembly of the sight with thermal imaging function.
FIG. 12 is a fourth schematic structural view of the adjusting assembly of the sight with thermal imaging function.
FIG. 13 is a schematic structural view of the beam splitting display assembly of a sight with thermal imaging function.
FIG. 14 is a third exploded view of the sight with thermal imaging function.

In the drawings: 1. Body; 2. Front cover; 3. Lens; 4. Back cover; 5. Window protection glass; 6. Solar charging panel; 7. Adjusting assembly; 8. Beam splitting display assembly; 9. Pressing block; 10. Screw; 11. Battery cover assembly; 12. Thermal imaging lens assembly; 13. Thermal imaging core assembly; 14. Battery; 15. First main control board; 16. Second main control board; 17. Adjusting assembly main body; 18. LED base; 19. Chip base; 20. LED graphics chip; 21. Slope; 22. Beveled ejector block; 23. First fine-tuning screw; 24. Transverse ejector block; 25. Second fine-tuning screw; 26. Transverse ejector spring; 27. Compression spring; 28. Infrared lighting assembly; 29. Beam splitter base; 30. Beam splitter; 31. Display screen; 32. Beam splitter cover; 33. Conductive tube; 34. Conductive plate; 35. Buffer pad; 36. Conductive spring; 37. Positive electrode plate; 38. Connecting sleeve; 39. Lens gasket; 40. Sealing gasket; 41. Core pressing ring; 42. Core buffer pad; 43. Adjusting screw; 44. Cover; 45. Data charging port; 46. Charging indicator light; 47. Switch indicator light; 48. Low-light night vision camera module; 49. Target; 50. Eye; 51. Main control board; 52. Thermal imaging core assembly and night vision core.

### DETAILED DESCRIPTION

In order to further elaborate the technical means adopted by the present disclosure to achieve the intended purpose and the effects, the specific implementation manner, structural features and effects thereof of the present disclosure are described in detail below with reference to the drawings and the embodiments.

The technical solutions in the embodiments of the present disclosure will be clearly and completely described below with reference to the accompanying drawings in the embodiments of the present disclosure. Obviously, the described embodiments are only some of the embodiments of the present disclosure, but not all of the embodiments. Based on the embodiments of the present disclosure, all other embodiments obtained by those of ordinary skill in the art without paying creative efforts fall within the scope of protection of the present disclosure.

In the description of the present disclosure, it should be understood that the orientations or positional relationships indicated by the terms such as "center", "upper", "lower", "front", "rear", "left", "right", "vertical", "horizontal", "align", "overlap", "bottom", "inside", "outside", etc., are orientations or positional relationships shown based on the accompanying drawings, and are used only for the purpose of facilitating the description of the present disclosure and simplifying the description, and are not intended to indicate or imply that the apparatus or element referred to must have a specific orientation, or be constructed and operated in a particular orientation, thus they are not to be construed as a limitation of the present disclosure.

The terms "first" and "second" are used for descriptive purposes only and are not to be understood as indicating or implying relative importance or implicitly specifying the number of the technical features indicated. Therefore, the features defined with "first" and "second" may explicitly or implicitly include one or more of the features; in the description of the present disclosure, unless otherwise stated, the meaning of "plurality" is two or more.

### Embodiment 1

In order to solve the problem that the observation and identification of the target are greatly affected by ambient light due to the fact that the existing optical system of a sight requires the human eye to observe the target directly.

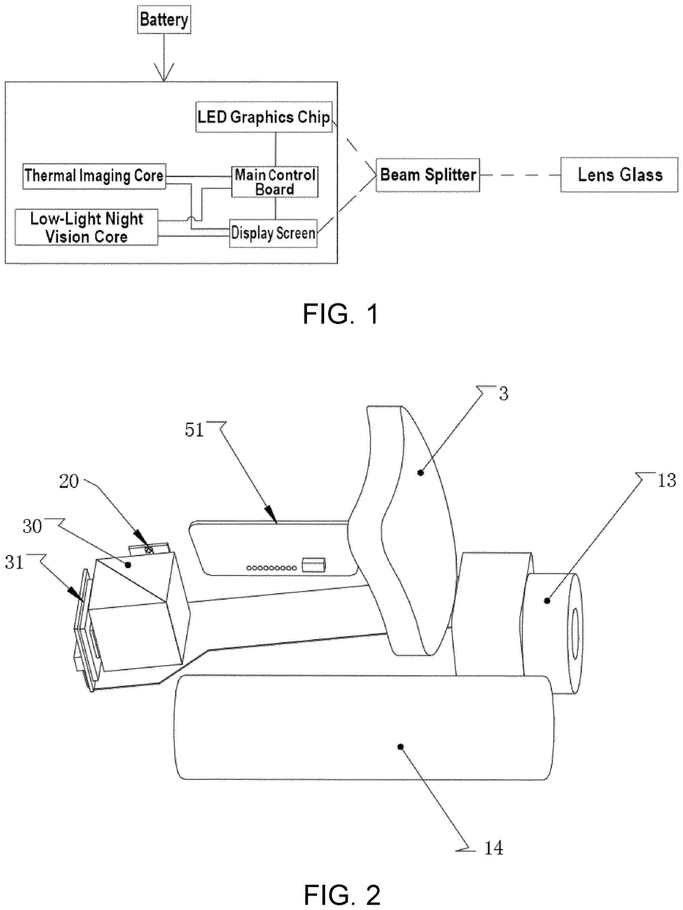

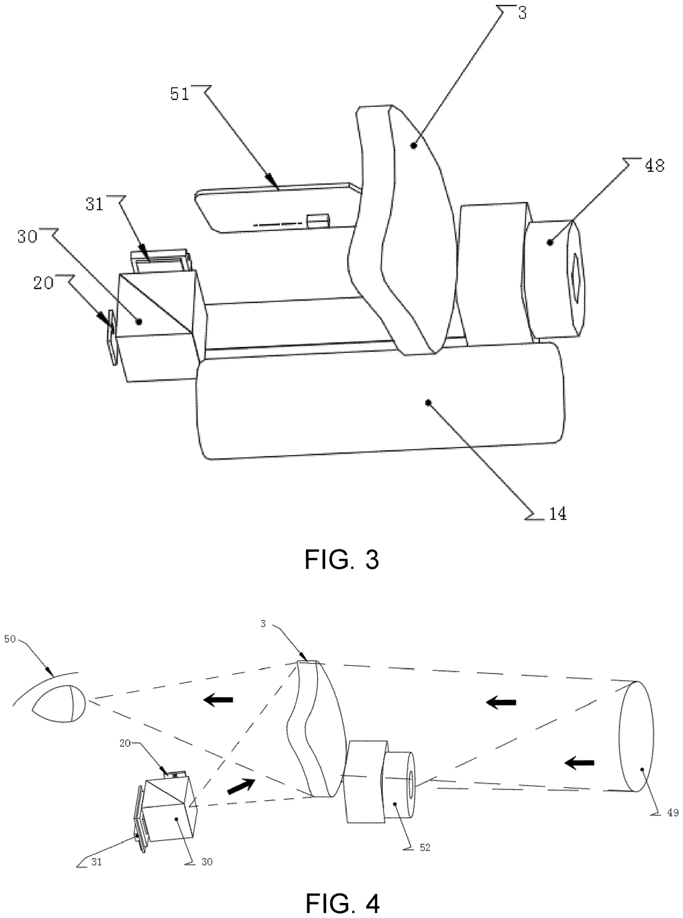

The present disclosure provides a sight system based on a fusion of infrared photography, low-illumination photography and an LED aiming light spot as shown in FIGS. 1∼4, where the system includes an LED graphics chip 20, a lens 3, a beam splitter 30, a display screen 31, a thermal imaging core assembly 13, a low-light night vision camera module 48, and a main control board 1. The thermal imaging core assembly 13 is electrically connected to the main control board 1, the low-light night vision camera module 48 is electrically connected to the main control board 1, the thermal imaging core assembly 13 and the low-light night vision camera module 48 are both electrically connected to the display screen 31, and the main control board 1 is electrically connected to the LED graphics chip 20 and the display screen 31, respectively. The light emitted by the LED graphics chip 20 and the light emitted by the display screen 31 both pass through the beam splitter 30 and are incident to the lens 3. The LED graphics chip 20 provides an aiming light spot under the control of the main control board 1. The light emitted by the LED graphics chip 20 is reflected or transmitted by the beam splitter 30 and then incident to the lens 3, the light is then reflected by the lens 3 and incident to the shooter's eyes 50. At the same time, the shooter's eyes 50 may directly observe the target 49 and the surrounding scenes through the lens 3. In addition, the thermal imaging core assembly 13 and the low-light night vision camera module 48 may capture video images of the target 49 and the surrounding scenes under the control of the control panel 1. The captured video images are played synchronously through the display screen 31. The images are incident to the lens 3 after being transmitted or refracted by the beam splitter 30, and are incident to the shooter's eyes 50 after being reflected by the lens 3. The source of the shooter's observation of the target 49 and the surrounding scenes may be the directly observed target 49 and the surrounding scenes, or it can be the video of the thermal imaging core assembly 13 and the low-light night vision camera module 48 projected by the display screen 31, thereby overcoming the problems of the existing sights that the observation is not clear and is greatly affected by environmental factors when the shooter directly observes the target 49 and the surrounding scenes through the lens 3. FIG. 4 is a schematic view showing the light path of the sight system based on the fusion of infrared photography, low-illumination photography and the LED aiming light spot. As can be seen from FIG. 4, the sight system is an of a reflective sight optical system, i.e., the light emitted by the LED graphics chip 20 and the display screen 31 are all reflected by the lens 3 and then enter the shooter's eyes 50.

Further, the light incident from the display screen to the beam splitter and the light incident from the LED graphics chip 20 to the beam splitter are arranged at 90°. It should be noted that one of the aiming light spot emitted by the LED graphics chip 20 and the image played by the display screen 31 is reflected by the beam splitter 30, and the other is transmitted by the beam splitter 30, as shown in FIGS. 2 and 3.

Further, the main function of the beam splitter 30 is to fuse light. Therefore, the beam splitter 30 may also be replaced by a semi-transparent and semi-reflective plane reflector.

Further, the sight system based on the fusion of infrared photography, low-illumination photography and the LED aiming light spot further includes a battery 14. The battery 32 is electrically connected to the LED graphics chip 20, the display screen 31, the thermal imaging assembly 13, the low-light night vision camera module 48 and the main control board 1, respectively, and is used to provide the electrical energy required for the operation of the LED graphics chip 20, the display screen 31, the thermal imaging core assembly 13, the low-light night vision camera module 48 and the main control board 1.

Further, the battery 14 may be a CR123A, 18650, 18350, polymer lithium battery, etc. The LED graphics chip 20 may adopt an LED chip set model HK-882. The display screen 31 may use a Micro LED or an OLED. The thermal imaging core assembly 13 may use an Arrow's thermal imaging core assembly. The low-light night vision camera module 48 may use a SONY low-illumination 385 or 482 low-light night vision camera module. The main control board 1 is customized and developed according to the product requirements of using the LED graphics chip 20, the display screen 31, the thermal imaging core assembly 13, and the low-light night vision camera module 48. For example, a main control board model 21109 developed based on the LED chipset model HK-882, Micro LED, the thermal imaging core assembly from Arrow, Amap, etc., and the SONY low- illumination CMOS sensor may be used.

Further, depending on different application scenarios, the thermal imaging core assembly 13 and the low-light night vision camera module 48 as shown may be provided separately from the sight. For example, the images captured by the thermal imaging core assembly 13 and the low-light night vision camera module 48 may be directly transmitted to the sight or AR glasses in a wireless or wired manner, thereby improving the identifiability of the target and expanding the application environment of red dot sights. Users can freely choose to use the thermal imaging core assembly 13 or the low-light night vision camera module 48 with the sight according to their own application scenarios.

### Embodiment 2

On the basis of Embodiment 1, the LED graphics chip may also be replaced by a Micro LED screen. In this case, the system has two screens, one screen displays the divided image, and the other screen displays the image captured by the infrared photography or low-illumination photography. Two paths of light are reflected or transmitted by the beam splitter and then incident to the lens, and further incident to the shooter's eyes after being reflected by the lens. At the same time, the shooter can also directly observe the image of target and surrounding through the lens.

### Embodiment 3

Further, unlike Embodiment 1 and Embodiment 2, the sight system based on the fusion of infrared photography, low-illumination photography and the LED aiming light spot includes the lens, a OLED screen or Micro LED display screen, a thermal imaging core assembly, a low-light night vision camera module and a main control board. The thermal imaging core assembly is electrically connected to the main control board, the low-light night vision camera module is electrically connected to the main control board, the thermal imaging core assembly and the low-light night vision camera module are both electrically connected to the display screen, the main control board is electrically connected to the OLED screen, and the light emitted by the OLED screen is incident to the lens. In this case, an OLED screen or Micro LED display is used, the beam splitter is not used, while two colors of LEDs of the OLED screen or Micro LED display screen are used, in which the green ones display the fused image and the red ones displays the divided image. The light emitted by the OLED screen or Micro LED display is directly incident to the lens, and is further incident to the shooter's eyes after being reflected by the lens. At the same time, the shooter can also directly observe the image of target and surrounding through the lens.

In summary, through the fusion of infrared photography, low-illumination photography and observation of the target with human eye, the sight system based on the fusion of infrared photography, low-illumination photography and the LED aiming light spot can assist in observing the target or identifying the same, and then determining the aiming target through an aiming light spot, so as to perform an accurate shooting. The sight system based on the fusion of infrared photography, low-illumination photography and the LED aiming light spot can reduce the impact of environmental factors such as light and distance on the accuracy of shooting, enables the identification of targets in such a manner that it is not solely dependent on human observation of the target, improves the identifiability of target and expands the application environment of red dot sights.

### Embodiment 4

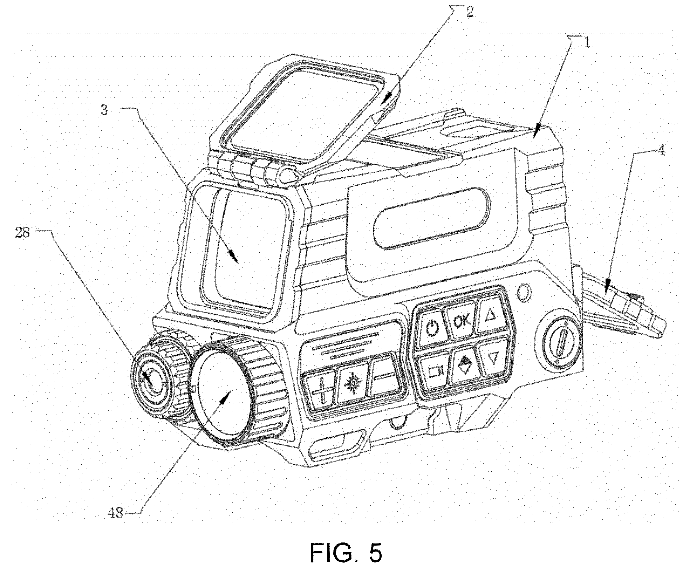

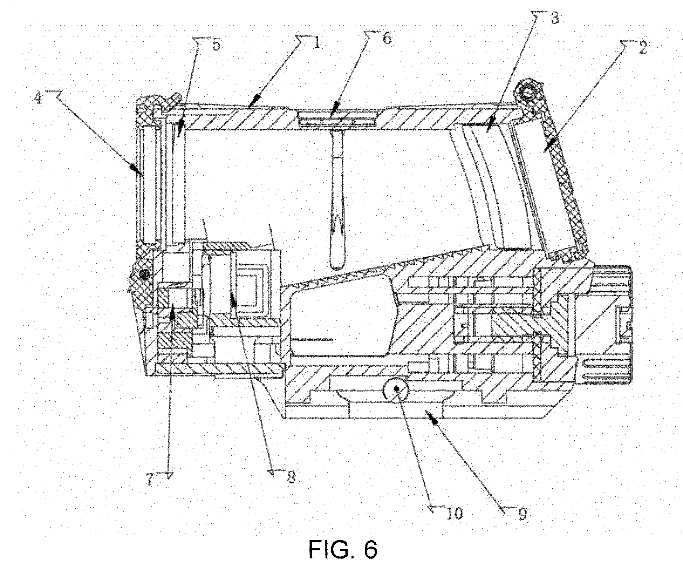

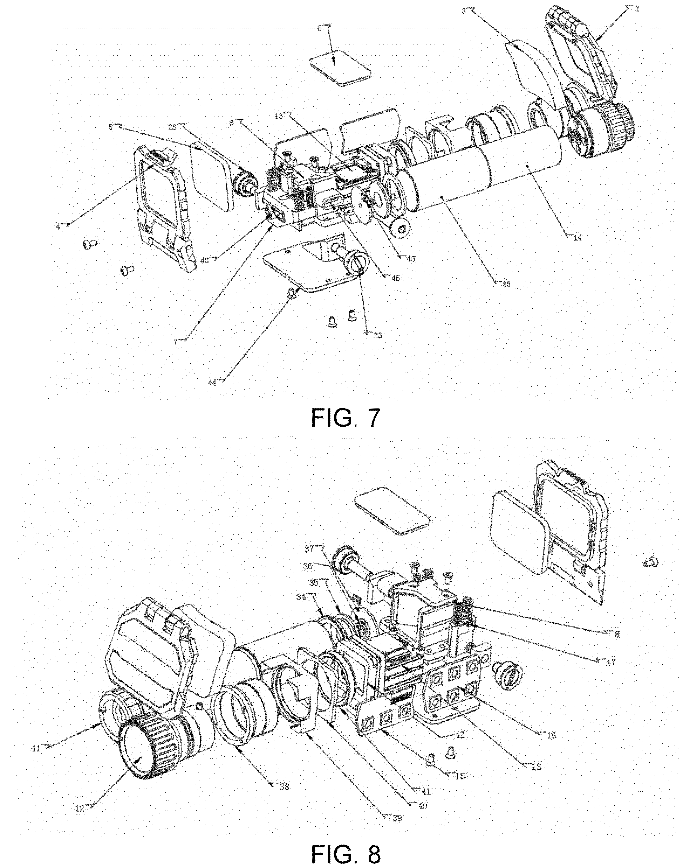

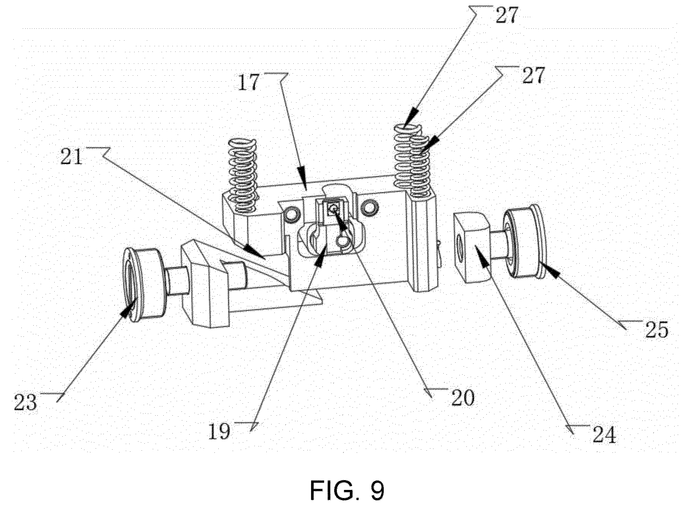

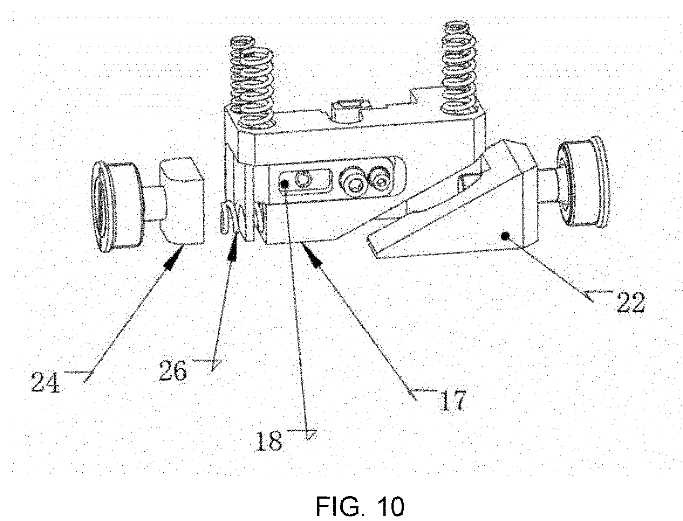

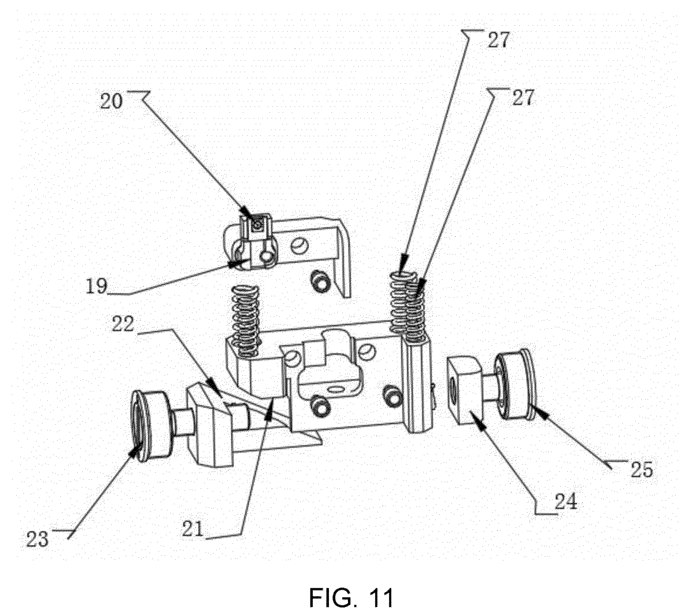

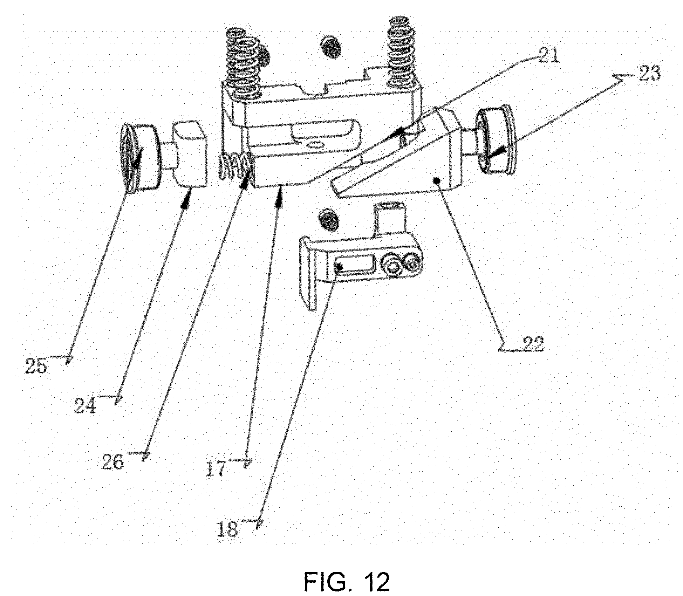

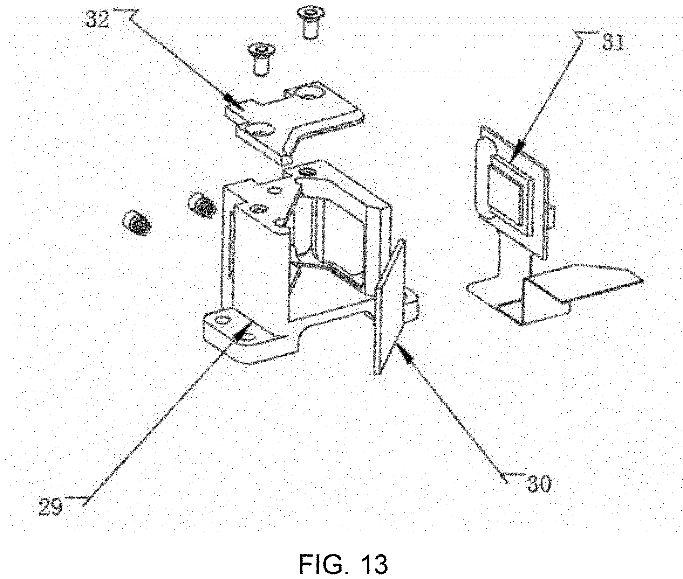

Applying the solution of the sight system based on the fusion of infrared photography, low-illumination photography and the LED aiming light spot described in Embodiments 1 to 3, the present disclosure provides a sight with thermal imaging function as shown in FIGS. 5 to 13. Considering the needs of practical applications, in the sight with thermal imaging function the main control board 51 is divided into a first main control board 15 and a second main control board 16 to provide a reasonable configuration of control buttons, and two image fusion schemes are provided. The thermal imaging core assembly and night vision core 52 are also set up in two schemes: one is that the thermal imaging lens assembly 12 is used alone, and the other is that an infrared lighting assembly 28 is used in conjunction with the low-light night vision camera module 48, which will be described in detail below.

The present disclosure provides a sight with thermal imaging function as shown in FIGS. 5∼13, where the sight includes a body 1. A battery cover assembly 11, a thermal imaging lens assembly 12, a thermal imaging core assembly 13, a battery 14, an adjusting assembly 7, and a beam splitting display assembly 8 are provided underneath the body 1. The battery cover assembly 11 and the thermal imaging lens assembly 12 are provided side by side. The battery 14 is provided behind the battery cover assembly 11 and mainly supplies power to the battery cover assembly 11 and the thermal imaging lens assembly 12. The thermal imaging core assembly 13 is provided behind the thermal imaging lens assembly 12, the adjusting assembly 7 is provided behind the thermal imaging core assembly 13, and the beam splitting display assembly 8 is provided above the adjusting assembly 7. The beam splitting display assembly 8 is fixedly connected to a fixed adjusting assembly main body 17 of the adjusting assembly 7 through screws. The adjusting assembly 7 can adjust the following LED graphics chip 20, the beam splitter 30, and display screen 31 up and down, left and right. The adjusting assembly 7 further includes an adjusting screw 43. The adjusting screw 43 is provided behind the adjusting assembly main body 17. The adjusting assembly main body 17 is pulled or pushed by the adjusting screw 43 to achieve position adjustment in the front-rear direction.

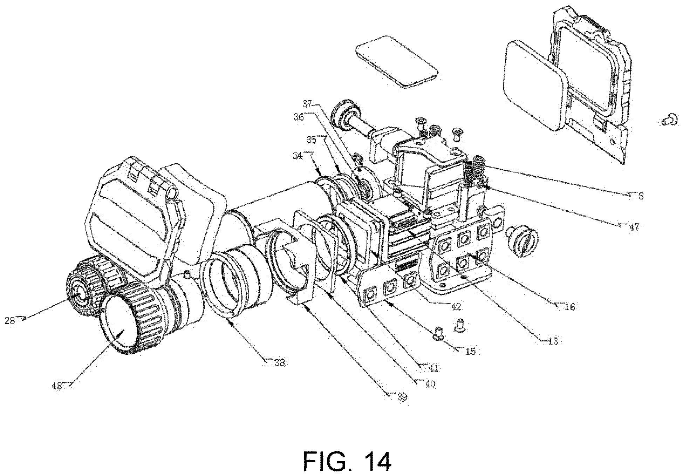

Further, as shown in FIG. 14, the battery cover assembly 11 is replaced with the infrared lighting assembly 28, and the thermal imaging lens assembly 12 is replaced with a low-light night vision camera module 48.

Further, a front cover 2 is provided in front of the body 1, a lens 3 is provided behind the front cover 2, a back cover 4 is provided behind the body 1, a window protection glass 5 is provided in front of the back cover 4. Both the front cover 2 and the back cover 4 are connected to the body 1 through a rotating shaft. The difference is that the rotating shaft of the front cover 2 is arranged at the top and the rotating shaft of the back cover 4 is arranged at the bottom. A solar charging panel 6 is provided in the middle of the top of the body 1. The solar charging panel 6 mainly supplies power to the LED graphics chip 20.

Further, a first main control board 15 and a second main control board 16 are provided on the right side of the body 1, and the first main control board 15 is arranged in front of the second main control board 16. The first main control board 15 is configured to correspond to the three buttons on the right front side of FIG. 5 to complete the control of the battery cover assembly 11 and can increase or decrease the brightness of the red dot. The second main control board 16 is configured to correspond to the six buttons on the right rear side of FIG. 5, and completes the selection of functions such as switching, video recording, confirmation, and up and down adjustment for the sight with thermal imaging function.

Further, the adjusting assembly 7 includes the adjusting assembly main body 17, an LED base 18 is provided in the adjusting assembly main body 17, the LED base 18 is connected to a chip base 19, and an LED graphics chip 20 is provided on the chip base 19. The lower left side of the adjusting assembly main body 17 is provided with a slope 21, the slope 21 is in contact with a beveled ejector block 22, and a first fine-tuning screw 23 is provided on the left side of the beveled ejector block 22. A transverse ejector block 24 is provided on the right side of the adjusting assembly main body 17, a second fine-tuning screw 25 is provided on the right side of the transverse ejector block 24, and a transverse ejector spring 26 is further provided between the adjusting assembly main body 17 and the transverse ejector block 24. A compression spring 27 is provided above the adjusting assembly main body 17.

Further, the beam splitting display assembly 8 includes a beam splitter base 29, a beam splitter 30 provided in the beam splitter base 29, a display screen 31 provided on the right side of the beam splitter base 29, and a beam splitter cover 32 provided above the beam splitter base 29. The light incident from the display screen 31 to the beam splitter 30 and the light incident from the LED graphics chip 20 to the beam splitter 30 are arranged at 90°. It should be noted that one of the aiming light spot emitted by the LED graphics chip 20 and the image played by the display screen 31 is reflected by the beam splitter 30, and the other is transmitted by the beam splitter 30.

Further, the main function of the beam splitter 30 is to fuse light. Therefore, the beam splitter 30 may also be replaced by a semi-transparent and semi-reflective plane reflector.

Further, a conductive tube 33 is further provided at the periphery of the battery 14, and a conductive plate 34, a buffer pad 35, a conductive spring 36 and a positive electrode plate 37 are provided in sequence behind the battery 14, which is a conventional design of the battery 14.

Further, the thermal imaging lens assembly 12 further includes a connecting sleeve 38, a lens gasket 39, a sealing gasket 40, and a core pressing ring 41. The connecting sleeve 38, the lens gasket 39, the sealing gasket 40, and the core pressing ring 41 are sequentially placed on the thermal imaging lens to fix and protect the lens. A core buffer pad 42 is provided between the thermal imaging lens assembly 12 and the thermal imaging core assembly 13, the core buffer pad 42 can avoid direct contact and collision between the thermal imaging lens assembly 12 and the thermal imaging core assembly 13.

Further, a data charging port 45 is further provided on the right side of the body 1 and behind the battery 14, and a charging indicator light 46 is provided near the data charging port 45.

Further, a switch indicator light 47 is provided on the left side of the body 1 and near the second main control board 16.

Further, light emitted by the LED graphics chip 20 and light emitted by the display screen 31 both pass through the beam splitter 30 and are incident to the lens 3. The LED graphics chip 20 provides an aiming light spot under the control of the main control board 1. The light emitted by the LED graphics chip 20 is reflected or transmitted by the beam splitter 30 and then incident to the lens 3, the light is then reflected by the lens 3 and incident to the shooter's eyes. At the same time, the shooter's eyes may directly observe the target and the surrounding scenes through the lens 3. In addition, the thermal imaging lens assembly 12 may capture video images of the target and the surrounding scenes. The captured video images are played synchronously through the display screen 31. The images are incident to the lens 3 after being transmitted or refracted by the beam splitter 30, and are incident to the shooter's eyes after being reflected by the lens 3. The source of the shooter's observation of the target and the surrounding scenes may be the directly observed target and the surrounding scenes, or it can be the video of the thermal imaging lens assembly 12 projected by the display screen 31, thereby overcoming the problems of the existing sights that the observation is not clear and is greatly affected by environmental factors when the shooter directly observes the target and the surrounding scenes through the lens 3.

Further, the battery 14 may be a CR123A, 18650, 18350, polymer lithium battery, etc. The LED graphics chip 20 may adopt an LED chip set model HK-882. The display screen 31 may use a Micro LED or an OLED. The thermal imaging lens assembly 12 may use an Arrow's thermal imaging core assembly. The infrared lighting assembly 28 uses an LED source with a wavelength of 850nm or a laser light source. The low-light night vision camera module 48 is a SONY 482 low-light night vision camera module. The main control board is customized and developed according to the product requirements of using the LED graphics chip 20, the display screen 31, the thermal imaging lens assembly 12, the infrared lighting assembly 28 and the low-light night vision camera module 48. For example, a main control board model 21109 developed based on the LED chipset model HK-882, Micro LED, the thermal imaging core assembly from Arrow, Amap, etc., and the SONY low- illumination CMOS sensor may be used.

Further, depending on different application scenarios, the thermal imaging lens assembly 12 as shown may be provided separately from the sight. For example, the images captured by the thermal imaging lens assembly 12 may be directly transmitted to the sight or AR glasses through wireless or wired manners, thereby improving the identifiability of target and expanding the application environment of red dot sights. Users can freely choose to use the thermal imaging lens assembly 12 or the infrared lighting assembly 28 with the sight according to their own application scenarios.

In summary, through the fusion of infrared photography, low-illumination photography and observation of the target with human eye, the sight with thermal imaging function can assist in observing the target or identifying the same, and then determining the aiming target through an aiming light spot, so as to perform an accurate shooting. The sight with thermal imaging function can reduce the impact of environmental factors such as light and distance on the accuracy of shooting, and can also reduce the risk of exposure of shooters, which enables the identification of targets in such a manner that it is not solely dependent on human observation of target, improves the identifiability of the target and expands the application environment of red dot sights.

The above content is a further detailed description of the present disclosure in combination with specific preferred embodiments, and it cannot be concluded that the specific implementation of the present disclosure is limited to these descriptions. For those of ordinary skill in the technical field to which the present disclosure belongs, several simple deductions or substitutions can be made without departing from the concept of the present disclosure, which should be regarded as falling within the protection scope of the present disclosure.

## Claims

1. A sight system based on a fusion of infrared photography, low-illumination photography and an LED aiming light spot, comprising: an LED graphics chip (20), a lens (3), a beam splitter (30), a display screen (31), a thermal imaging core assembly (13), a low-light night vision camera module (48), and a main control board (51); wherein the thermal imaging core assembly (13) is electrically connected to the main control board (51), the low-light night vision camera module (48) is electrically connected to the main control board (51), the thermal imaging core assembly (13) and the low-light night vision camera module (48) are both electrically connected to the display screen (31), and the main control board (51) is electrically connected with the LED graphics chip (20) and the display screen (31), respectively, and wherein light emitted by the LED graphics chip (20) and light emitted by the display screen (31) both pass through the beam splitter (30) and are incident to the lens (3).

2. The sight system based on the fusion of infrared photography, low-illumination photography and the LED aiming light spot according to claim 1, wherein the light incident from the display screen (31) to the beam splitter (30) and the light incident from the LED graphics chip (20) to the beam splitter (30) are arranged at 90°.

3. The sight system based on the fusion of infrared photography, low-illumination photography and the LED aiming light spot according to claim 1, comprising the lens (3), an OLED screen, the thermal imaging core assembly (13), the low-light night vision camera module (48), and the main control board (51); wherein the thermal imaging core assembly (13) is electrically connected to the main control board (51), the low-light night vision camera module (48) is electrically connected to the main control board (51), the thermal imaging core assembly (13) and the low-light night vision camera module (48) are both electrically connected to the display screen (31), the main control board (41) is electrically connected to the OLED screen, and light emitted by the OLED screen is incident to the lens (3).

4. A sight with thermal imaging function, comprising: a body (1), wherein a battery cover assembly (11), a thermal imaging lens assembly (12), a thermal imaging core assembly (13), a battery (14), an adjusting assembly (7) and a beam splitting display assembly (8) are provided underneath the body (1), wherein the battery cover assembly (11) and the thermal imaging lens assembly (12) are provided side by side, and the battery (14) is provided behind the battery cover assembly (11), wherein the thermal imaging core assembly (13) is provided behind the thermal imaging lens assembly (12), the adjusting assembly (7) is provided behind the thermal imaging core assembly (13), and the beam splitting display assembly (8) is provided above the adjusting assembly (7).

5. The sight with thermal imaging function according to claim 4, wherein the battery cover assembly (11) is replaced with an infrared lighting assembly (28), and the thermal imaging lens assembly (12) is replaced with a low-light night vision camera module (48).

6. The sight with thermal imaging function according to claim 4, wherein a front cover (2) is provided in front of the body (1), a lens (3) is provided behind the front cover (2), a back cover (4) is provided behind the body (1), a window protection glass (5) is provided in front of the back cover (4), and a solar charging panel (6) is provided in the middle of the top of the body (1).

7. The sight with thermal imaging function according to claim 4, wherein a first main control board (15) and a second main control board (16) are provided on the right side of the body (1), and the first main control board (15) is located in front of the second main control board (16).

8. The sight with thermal imaging function according to claim 4, wherein the adjusting assembly (7) comprises an adjusting assembly main body (17), an LED base (18) is provided in the adjusting assembly main body (17), the LED base (18) is connected to a chip base (19), and an LED graphics chip (20) is provided on the chip base (19); wherein the lower left side of the adjusting assembly main body (17) is provided with a slope (21), the slope (21) is in contact with a beveled ejector block (22), and a first fine-tuning screw (23) is provided on the left side of the beveled ejector block (22); wherein a transverse ejector block (24) is provided on the right side of the adjusting assembly main body (17), a second fine-tuning screw (25) is provided on the right side of the transverse ejector block (24), and a transverse ejector spring (26) is further provided between the adjusting assembly main body (17) and the transverse ejector block (24); wherein a compression spring (27) is provided above the adjusting assembly main body (17), and the adjusting assembly (7) further comprises an adjusting screw (43) provided behind the adjusting assembly body (17).

9. The sight with thermal imaging function according to claim 4, wherein the beam splitting display assembly (8) comprises a beam splitter base (29), a beam splitter (30) provided in the beam splitter base (29), a display screen (31) provided on the right side of the beam splitter base (29), and a beam splitter cover (32) provided above the beam splitter base (29).

10. The sight with thermal imaging function according to claim 4, wherein a conductive tube (33) is further provided at the periphery of the battery (14), and wherein a conductive plate (34), a buffer pad (35), a conductive spring (36), and a positive electrode plate (37) are provided in sequence behind the battery (14).

11. The sight with thermal imaging function according to claim 4, wherein the thermal imaging lens assembly (12) further comprises a connecting sleeve (38), a lens gasket (39), a sealing gasket (40) and a core pressing ring (41), and wherein a core buffer pad (42) is provided between the thermal imaging lens assembly (12) and the thermal imaging core assembly (13).

12. The sight with thermal imaging function according to claim 4, wherein a data charging port (45) is further provided on the right side of the body (1) and behind the battery (14), and a charging indicator light (46) is provided near the data charging port (45).

13. The sight with thermal imaging function according to claim 4, wherein a switch indicator light (47) is provided on the left side of the body (1) and near a second main control board (16).
